# FASCICULE DE BREVET EUROPEEN

(11) **EP 1 413 394 B1**
(45) Date de publication et mention de la délivrance du brevet: **12.12.2007**
(21) Numéro de dépôt: 03356159.8
(22) Date de dépôt: 20.10.2003
(51) Int. Cl.: B23Q 11/08, E05D 15/26

(54) **Porte pour machine automatisée**
Tür für automatisierte Maschine
Door for automated machine

(30) Priorité: 25.10.2002 FR 0213363
(43) Date de publication de la demande: 28.04.2004
(73) Titulaire: Tiama, 69700 Montagny (FR)
(72) Inventeur: Garin, Jean-François, 69008 Lyon (FR); Miranda de Azevedo, Laurent, 69002 Lyon (FR)
(74) Mandataire: Thibault, Jean-Marc

(56) Documents cités:
- EP-A- 0 606 560
- DE-A- 10 020 804

## Description

La présente invention concerne le domaine technique des portes adaptées pour fermer l'accès à une machine au sens général.

La présente invention vise plus particulièrement une porte équipant une machine automatisée telle que par exemple une machine-outils, une machine de manutention, une machine de contrôle, etc.

Dans le domaine industriel, il apparaît fréquemment, notamment pour des raisons de sécurité ou de propreté, d'équiper une machine d'un habillage de protection constitué par des parois rigides montées sur le bâti de la machine. Cet habillage de protection est pourvu d'une porte à un ou plusieurs panneaux mobiles donnant accès à la machine. Ainsi, dans l'exemple de réalisation décrit par la demande de brevet européen 0 606 560, chaque porte est constituée de deux panneaux mobiles pourvus de moyens de guidage en coulissement et en pivotement assurant le repliement des panneaux l'un contre l'autre en position d'ouverture de la porte.

Il apparaît, par ailleurs, que les différentes fonctionnalités de la machine sont commandées par un dispositif appelé généralement interface homme-machine et monté par exemple sur l'habillage de protection de la machine. Cet interface homme-machine est positionné de manière qu'un opérateur puisse l'utiliser lorsque la porte est en position fermée. Cependant, lorsque la porte d'accès est ouverte, il s'avère fréquemment que l'interface homme-machine est difficilement accessible pour un opérateur souhaitant concomitamment utiliser l'interface et accéder à la machine.

Dans l'état de la technique, il est connu également d'adapter l'interface homme-machine sur un chariot mobile placé à côté de la machine ou comme décrit par le document DE 100 20804 sur un bras mobile porté par le bâti de la machine. Si de telles solutions offrent l'avantage de pouvoir utiliser l'interface homme-machine tout en ayant accès à la machine, il convient de constater que le chariot ou le bras mobile encombre l'environnement de la machine aussi bien lorsque la porte est ouverte que fermée.

L'analyse des solutions antérieures connues a conduit la déposante à mettre en évidence qu'il existe un besoin de disposer d'une interface homme-machine n'encombrant pas l'environnement de la machine et permettant à un opérateur de l'utiliser et d'accéder simultanément à la machine lorsque la porte est en position ouverte.

La présente invention vise donc à satisfaire ce besoin en proposant une solution permettant à un opérateur d'accéder à une machine tout en lui permettant simultanément d'utiliser une interface homme-machine qui, par ailleurs, ne représente pas une gêne dans l'environnement de la machine.

La présente invention vise donc à proposer une porte pour machine automatisée, ladite porte comportant au moins un panneau mobile et un châssis délimitant une baie et équipé de moyens de guidage en déplacement pour le panneau mobile, entre une position de fermeture dans laquelle la façade du panneau mobile ferme au moins en partie la baie et une position d'ouverture dans laquelle le panneau mobile est situé latéralement par rapport à la baie. Selon l'invention, le panneau mobile est conforme à la revendication 1.

Selon une première variante de réalisation, les moyens de déplacement de la structure de réception sont constitués par les moyens de guidage en déplacement qui assurent le coulissement et le pivotement du panneau mobile assurant qu'en position d'ouverture du panneau mobile la façade du panneau mobile se trouve tournée vers la baie.

Selon une deuxième variante de réalisation, les moyens de déplacement de la structure de réception sont constitués par des moyens de pivotement de l'interface homme-machine assurant que la façade de l'interface homme-machine est accessible en position de fermeture et en position d'ouverture du panneau mobile.

Ainsi, les moyens de guidage en déplacement assurent à la façade de l'interface homme-machine de s'étendre en position d'ouverture, dans un plan sensiblement perpendiculaire avec le plan délimité par là baie.

Selon un exemple de réalisation, les moyens de guidage en déplacement assurent à la façade de l'interface homme-machine de s'étendre en position d'ouverture, dans un plan formant avec le plan délimité par la baie, un angle compris entre 40° et 135° et de préférence entre 60° et 110°.

Selon un mode de réalisation pour lequel les moyens de guidage assurent le coulissement et le pivotement pour un panneau mobile, ces moyens de guidage sont constitués par au moins un rail de support et de guidage pour au moins un organe de roulement équipant le panneau mobile, le panneau mobile étant relié par un pivot à une barre d'extension guidée en translation selon une direction sensiblement perpendiculaire à la baie.

Selon un autre mode de réalisation d'une porte à deux panneaux mobiles, les moyens de guidage en coulissement et en pivotement sont constitués par au moins un rail de support et de guidage pour au moins un organe de roulement équipant un premier panneau mobile articulé à un deuxième panneau mobile monté articulé sur le châssis, les panneaux mobiles étant destinés à se replier l'un sur l'autre en position d'ouverture de la baie.

Par exemple, les moyens de guidage en coulissement et pivotement sont constitués par un rail de support et de guidage dit supérieur disposé en partie haute du châssis et un rail de guidage dit inférieur disposé en partie basse du châssis, l'un recevant le ou les organes de roulement portés par le panneau mobile, tandis que l'autre reçoit un organe de guidage.

Diverses autres caractéristiques ressortent de la description faite ci-dessous en référence aux dessins annexés qui montrent, à titre d'exemples non limitatifs, des formes de réalisation de l'objet de invention.
La **Fig. 1** est une vue en perspective montrant une porte conforme à l'invention en position fermée équipant une machine
La **Fig. 2** est une vue analogue à la **Fig. 1** illustrant une machine équipée d'une porte conforme à l'invention en position ouverte.
La **Fig. 3** est une vue en coupe en élévation partielle transversale montrant le montage d'une porte conforme à l'invention.
Les **Fig. 4** et **5** sont des vues schématiques montrant un autre exemple de réalisation d'une porte d'accès comportant un unique panneau mobile.

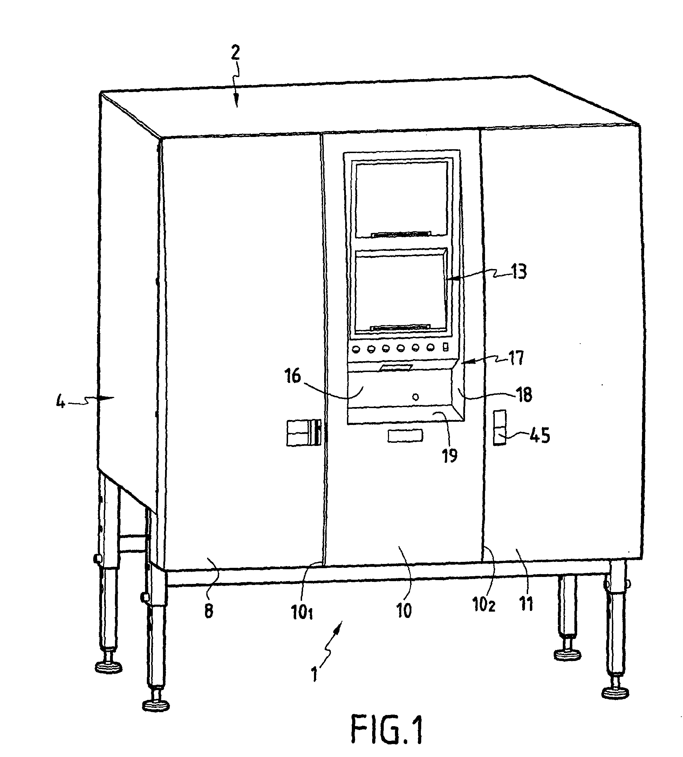

Tel que cela ressort plus précisément des **Fig. 1** à **3**, l'objet de l'invention concerne une porte **1** destinée à équiper une machine **2** au sens général telle que par exemple une machine-outil, une machine de manutention, une machine de contrôle, etc. Dans un exemple préféré de réalisation, la machine **2** est une machine automatisée permettant le défilement de récipients devant différents postes de contrôle ou d'inspection.

La machine **2** comporte de manière classique, un bâti **3** possédant dans l'exemple illustré une forme parallélépipédique. Ce bâti **3** est pourvu d'un habillage de protection **4** constitué par des panneaux de côté, de fond et de dessus. La machine **1** présente en façade, un châssis **6** délimitant une baie **7** permettant d'accéder au volume interne de la machine **1**. Cette baie **7** est ouverte ou fermée à l'aide d'une porte **1** conforme à l'invention, associée dans l'exemple illustré, à un vantail pivotant **8.** Dans l'exemple de réalisation illustré sur les **fig. 1 à 3,** la porte **1** comporte un premier panneau mobile **10** monté articulé à un deuxième panneau mobile **11**.

Le premier panneau mobile **10** comporte une structure **12** de réception pour une interface homme-machine **13** comportant différents moyens de contrôle et/ou de commande de la machine. Cette interface homme-machine **13** comporte par exemple un clavier, un écran, un pupitre de commande, une souris, etc. Cette interface homme-machine **13** possède une façade qui se trouve accessible à partir de la façade **14** du premier panneau mobile **10** lorsque ce dernier occupe sa position de fermeture de la baie (**Fig. 1**).

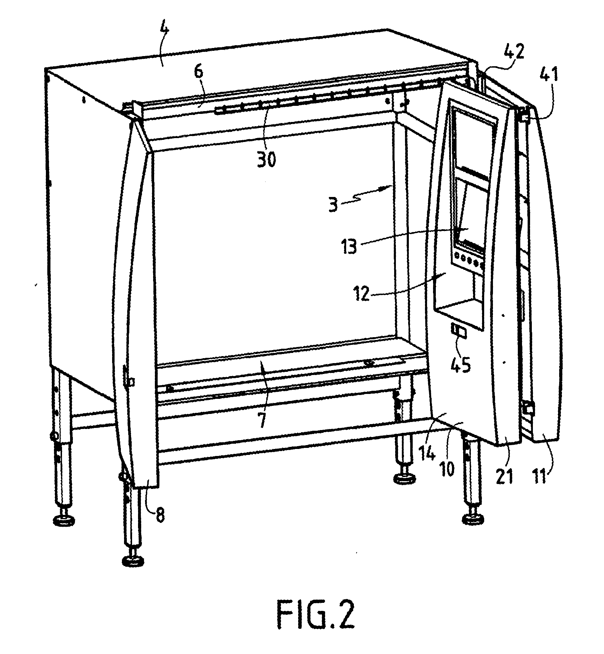

Tel que cela ressort de la **Fig. 2**, le premier panneau mobile **10** possède de préférence une épaisseur adaptée pour permettre le montage de l'interface homme-machine **13**. A cet effet, le premier panneau mobile **10** présente une paroi de fond **16** en avant de laquelle s'établit à distance, la paroi de façade **14** dans laquelle est aménagé au moins un logement **17** délimité par des joues **18** raccordées à une paroi horizontale d'appui **19**. Le logement **17** permet le montage des divers éléments constitutifs de l'interface homme-machine **13**. La paroi de fond **16** est reliée à la paroi de façade **14** par l'intermédiaire de deux flancs externes **21** de sorte que le premier panneau mobile **10** constitue un caisson fermé dans l'épaisseur duquel est montée l'interface homme-machine **13**.

Selon une autre caractéristique de la porte d'accès **1**, le châssis **6** est équipé de moyens **25** de guidage en déplacement pour les panneaux mobiles **10, 11** de manière à assurer le déplacement des panneaux mobiles entre une position de fermeture dans laquelle la façade **14** du premier panneau mobile **10** ferme au moins en partie la baie **7** (**Fig. 1**) et une position d'ouverture dans laquelle les panneaux mobiles **10, 11** s'étendent latéralement par rapport à la baie **7**.

Le panneau mobile **10** comporte également des moyens de déplacement de la structure de réception **12**, adaptés pour assurer, qu'en position d'ouverture du panneau mobile, la façade de l'interface homme-machine **13** se trouve tournée vers la baie pour permettre à un opérateur placé devant la baie **7**, d'accéder à la baie et simultanément à l'interface homme-machine **13** (**Fig. 2**). Il doit être considéré qu'en position fermée de la porte, un opérateur peut accéder à l'interface homme-machine **13** sans que cette interface encombre l'espace environnant de la machine **1**. En position d'ouverture de la baie **7**, un opérateur placé devant la baie peut accéder à l'interface homme-machine **13** tout en visualisant, sans changer de place, l'intérieur de la machine afin, simultanément, d'observer par exemple le résultat des commandes effectuées à l'aide de l'interface homme-machine **13**. De plus, l'accès à la baie **7** n'est pas limité, si ce n'est par l'épaisseur des panneaux mobiles **10, 11**.

Dans la variante préférée de réalisation illustrée sur les dessins, les moyens de déplacement de la structure de réception **12** sont constitués par les moyens de guidage en déplacement **25** du panneau mobile qui assurent le coulissement et le pivotement du panneau mobile **10** de manière qu'en position d'ouverture du panneau mobile, la façade **14** du panneau mobile se trouve tournée vers la baie **7**.

Dans l'exemple de réalisation illustré aux **fig. 1** à **3** mettant en oeuvre une porte **1** à deux panneaux mobiles **10, 11**, les moyens de guidage en coulissement et en pivotement **25** sont constitués par au moins un rail **30** de support et de guidage monté sur le châssis **6**. Dans l'exemple illustré, un rail **30** dit supérieur est monté sur une traverse longitudinale présentée par le châssis **6**. Le rail supérieur **30** possède une section droite transversale en forme de C et sert de support et de guidage pour un organe de roulement **31** tel qu'un galet par exemple. L'organe de roulement **31** est relié à une patte **32** montée autour d'un pivot **33,** dans la partie haute du premier panneau mobile **10** au niveau de son côté vertical libre **10₁.** Le premier panneau mobile **10** est équipé également d'un organe de guidage **35** supporté par une patte **36** monté sur un pivot **37** dans la partie basse du premier panneau mobile **10** au niveau de son côté vertical libre **10₁.** L'organe de guidage **35** est monté à l'intérieur d'un rail **39** dit inférieur supporté par une traverse longitudinale présentée par le châssis **6.** Par exemple, le rail inférieur **39** possède une section droite transversale en U.

Dans la description qui précède, le premier panneau mobile **10** se trouve donc suspendu au rail supérieur **30** tandis que le rail inférieur **39** coopérant avec l'organe de guidage **35** évite la rotation du premier panneau mobile **10**. Bien entendu, il peut être envisagé d'intervertir la position entre les organes de roulement **31** et de guidage **35** ou d'utiliser deux organes de roulement **31, 35** pour assurer le support et le guidage du premier panneau mobile **10**.

Le premier panneau mobile **10** est monté articulé au niveau de son côté vertical **10₂** opposé au côté vertical libre **10₁** par des charnières **41** sur un côté du deuxième panneau mobile **11** qui est également monté articulé sur le châssis **6** selon son côté opposé par des axes **42**. Le deuxième panneau mobile **11** est donc monté articulé d'un côté, au châssis **6** selon une direction verticale passant par les axes **42** et de l'autre côté, au premier panneau mobile **10** selon une direction aussi verticale passant par les charnières **41.**

Tel que cela ressort de la description qui précède, les panneaux mobiles **10** et **11** permettent en position déployée, de fermer la baie **7**. Dans cette position, les parois avant des panneaux **10** et **11** s'établissent dans le prolongement l'une de l'autre avec leurs faces tournées vers l'extérieur par rapport au volume interne de la machine **1**. Lorsqu'une intervention sur la machine **1** doit intervenir, la porte **1** est ouverte en effectuant un effort de traction sur une poignée **45** placée par exemple sur le deuxième panneau mobile **11** de manière à assurer un pliage entre les deux panneaux mobiles **10, 11** afin que le premier panneau mobile **10** vienne se replier contre le deuxième panneau mobile **11** avec leurs faces internes ou de fonds tournées l'une vers l'autre. Dans cette position, les panneaux mobiles **10, 11** s'étendent sensiblement perpendiculairement à la baie 7 avec le premier panneau mobile **10** ayant sa façade **14** tournée ou orientée vers la baie **7**. Le passage de la porte **1** de sa position ouverte à sa position fermée est effectué de manière inverse en effectuant par exemple un effort de traction sur le premier panneau mobile **10** à partir d'une poignée **45** pour l'amener à se déplacer le long des rails de guidage **30, 39**.

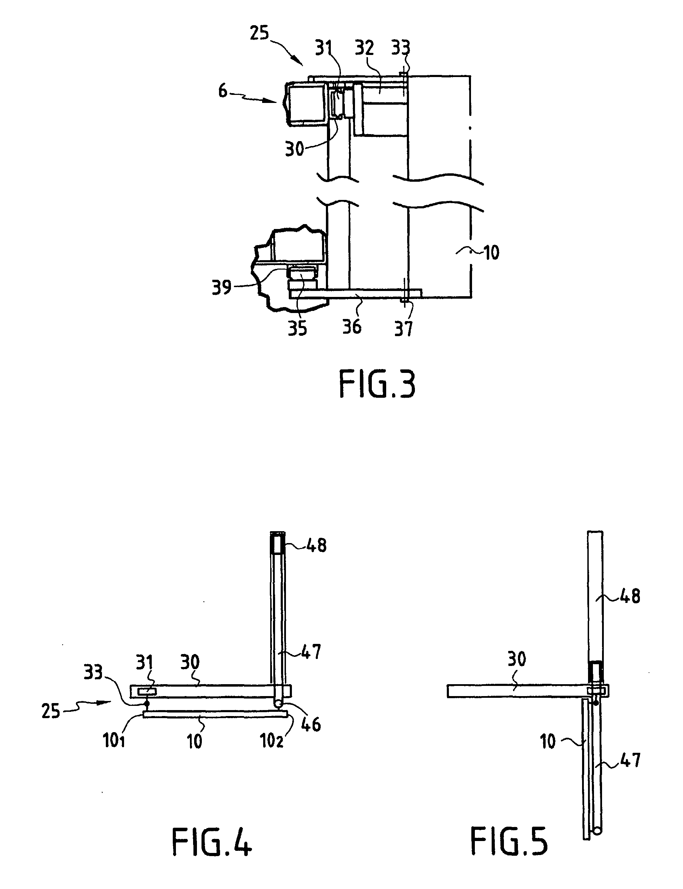

Les **fig. 4** et **5** illustrent une autre variante de réalisation des moyens de guidage en coulissement et en pivotement **25** pour une porte d'accès **1** comportant un unique panneau mobile **10**. Selon cette variante de réalisation, les moyens de guidage **25** sont constitués par au moins un et de préférence les deux rails de support et de guidage supérieur **30** et inférieur **39** tels que décrit précédemment pour des organes respectivement de roulement **31** et de guidage **35** montés selon des pivots **33, 37** à un côté vertical **10₁** du panneau mobile **10.** L'autre côté vertical **10₂** du panneau mobile **10** est relié à sa partie haute et à sa partie basse, par des pivots **46** à deux barres d'extension **47** guidées chacune en translation dans une glissière **48** montée selon une direction sensiblement perpendiculaire à la baie **7**.

Un effort de traction sur le panneau mobile **10** conduit les organes de roulement **31** et de guidage **35** à glisser le long des rails **30, 39** tout en provoquant simultanément la sortie des barres d'extension **47** pour permettre le pivotement du panneau mobile **10** de manière en fin de course à s'établir sensiblement perpendiculairement par rapport à la baie **7.** La fermeture de la baie **7** s'effectue selon un mouvement de sens inverse du panneau mobile **10**.

Dans la variante préférée de réalisation décrite ci-dessus, les moyens de déplacement de la structure de réception **12** sont constitués par les moyens de guidage en déplacement de la porte, qui permettent de positionner l'interface homme-machine **13** de manière que sa façade soit accessible aussi bien en position ouverte qu'en position fermée de la porte. Il est à noter que les moyens de déplacement de la structure de réception **12** peuvent être constitués par des moyens de pivotement de la structure de réception **12** de manière que la façade de l'interface homme-machine **13** soit accessible en position de fermeture et en position d'ouverture du panneau mobile. En d'autres termes, ces moyens de pivotement permettent d'amener, en position d'ouverture du panneau mobile, la façade de l'interface homme-machine **13**, au dos du panneau mobile **10** afin que celle-ci se trouve tournée vers la baie **7**.

Tel que cela ressort de la description qui précède, les moyens de guidage en déplacement sont adaptés pour amener, en position d'ouverture, la façade de l'interface homme-machine **13** dans une position autorisant l'accès à la baie **7** et à l'interface homme-machine **13**. En position d'ouverture, le panneau mobile **10** est situé latéralement ou sur le côté de la baie **7**. Dans l'exemple illustré, les moyens de guidage en déplacement permettent lorsque le panneau mobile **10** est en position d'ouverture que la façade de l'interface homme-machine **13** s'étende dans un plan sensiblement perpendiculaire avec le plan délimité par la baie **7**. En d'autres termes, ces moyens de déplacement permettent à la façade de l'interface homme-machine **13** de s'étendre, en position d'ouverture du panneau mobile, dans un plan formant avec le plan délimité par la baie **7,** un angle compris entre 40° et 135° et de préférence entre 60 et 110°.

Avantageusement, le panneau mobile **10** est verrouillé dans ses positions d'ouverture et de fermeture par tous moyens appropriés.

## Revendications

1. - Porte pour machine automatisée, ladite porte comportant au moins un panneau mobile (**10,11**) et un châssis (6) délimitant une baie (**7**) et équipé de moyens de guidage en déplacement pour le panneau mobile (**10, 11**), entre une position de fermeture dans laquelle la façade (**14**) du panneau mobile (**10**) ferme au moins en partie la baie (**7**) et une position d'ouverture dans laquelle le panneau mobile (**10**) est situé latéralement par rapport à la baie (**7**), **caractérisée en ce que** le panneau mobile **(10)** comporte :
- une interface homme-machine (**13**) comportant des moyens de contrôle et/ou de commande de la machine et montée sur une structure de réception (**12**), la façade de l'interface homme machine (13) étant accessible lorsque le panneau mobile est en position de fermeture,
- et des moyens de déplacement de la structure de réception (**12**) assurant qu'en position d'ouverture du panneau mobile, la façade (**14**) de l'interface homme-machine (**13**) se trouve tournée vers la baie (**7**) pour permettre à un opérateur placé devant la baie, d'accéder simultanément à la baie et à l'interface homme-machine (**13**).

2. Porte selon la revendication 1, **caractérisée en ce que** les moyens de déplacement de la structure de réception (**12**) sont constitués par les moyens de guidage en déplacement (**25**) qui assurent le coulissement et le pivotement du panneau mobile (**10, 11**) assurant qu'en position d'ouverture du panneau mobile la façade (**14**) du panneau mobile se trouve tournée vers la baie (**7**)

3. Porte selon la revendication 1, **caractérisée en ce que** les moyens de déplacement de la structure de réception (**12**) sont constitués par des moyens de pivotement de la structure de réception (**12**) de l'interface homme-machine de manière que la façade de l'interface homme-machine (**13**) soit accessible en position de fermeture et en position d'ouverture du panneau mobile.

4. Porte selon la revendication 1, **caractérisée en ce que** les moyens de guidage en déplacement assurent à la façade de l'interface homme-machine de s'étendre en position d'ouverture, dans un plan formant avec le plan délimité par la baie (**7**), un angle compris entre 40° et 135° et de préférence entre 60° et 110°.

5. - Porte selon la revendication 1 ou 4, **caractérisée en ce que** les moyens de guidage en déplacement assurent à la façade de l'interface homme-machine de s'étendre en position d'ouverture, dans un plan sensiblement perpendiculaire avec le plan délimité par la baie (**7**).

6. - Porte selon la revendication 1, **caractérisée en ce que** les moyens de guidage (**25**) assurent le coulissement et le pivotement pour un panneau mobile (**10**) et sont constitués par au moins un rail de support et de guidage (**30**) pour au moins un organe de roulement (**31**) équipant le panneau mobile (**10**), le panneau mobile étant relié par un pivot (**46**) à une barre d'extension (**47**) guidée en translation selon une direction sensiblement perpendiculaire à la baie.

7. Porte selon la revendication 1, **caractérisée en ce que** les moyens de guidage en coulissement et en pivotement (**25**) sont constitués par au moins un rail de support et de guidage (**30**) pour au moins un organe de roulement (**31**) équipant un premier panneau mobile (**10**) articulé à un deuxième panneau mobile (**11**) monté articulé sur le châssis, les panneaux mobiles (**10, 11**) étant destinés à se replier l'un sur l'autre en position d'ouverture de la baie.

8. - Porte selon la revendication 6 ou 7, **caractérisée en ce que** les moyens de guidage en coulissement et en pivotement (**25**) sont constitués par un rail de support et de guidage dit supérieur (**30**) disposé en partie haute du châssis (**6**) et un rail de guidage dit inférieur (**39**) disposé en partie basse du châssis, l'un recevant le ou les organes de roulement portés par le panneau mobile, tandis que l'autre reçoit un organe de guidage (**35**).

9. Machine automatisée **caractérisée en ce qu'**elle comporte une porte (1) conforme à l'une des revendications 1 à 8.

## Claims

1. - Door for an automated machine, said door comprising at least one mobile panel (**10, 11)** and a chassis **(6)** delimiting an opening **(7)** and equipped with guide means for the movement of the mobile panel **(10, 11**), between a closed position in which the façade (**14**) of the mobile panel **(10)** at least partly closes the opening **(7)** and an open position in which the mobile panel **(10)** is located laterally with respect to the opening **(7), characterised in that** the mobile panel **(10)** comprises:
- a man-machine interface **(13)** containing machine instrumentation and/or control means that is mounted on a reception structure **(12),** with the façade of the man-machine interface **(13)** being accessible when the mobile panel is in the closed position, and
- reception structure displacement means **(12)** assuring that when the mobile panel is in the open position, the façade **(14)** of the man-machine interface **(13)** is moved towards the opening **(7)** so that an operator in position in front of the opening can access the opening and the man-machine interface **(13)** at the same time.

2. **-** Door according to claim 1, **characterised in that** the reception structure displacement means **(12)** are composed of displacement guide means **(25)** that slide and pivot the mobile panel (**10, 11**) thus ensuring that the mobile panel façade **(14)** is facing the opening **(7)** when the mobile panel is in the open position.

3. - Door according to claim 1, **characterised in that** the reception structure displacement means **(12)** are composed of means capable of pivoting the reception structure **(12)** of the man-machine interface such that the façade of the man-machine interface (**13**) is accessible when the mobile panel is in the closed position or the open position.

4. - Door according to claim 1, **characterised in that** the displacement guide means enable the façade of the man-machine interface to move in the open position into a plane forming an angle with the plane delimited by the opening **(7)** equal to between 40° and 135°, and preferably between 60° and 110°.

5. **-** Door according to claim 1 or 4, **characterised in that** the displacement guide means enable the façade of the man-machine interface to move in the open position into a plane approximately perpendicular to the plane delimited by the opening **(7).**

6. - Door according to claim 1, **characterised in that** the guide means **(25)** slide and pivot a mobile panel **(10)** and consist of at least one support and guide rail **(30)** for at least one roller device **(31)** fitted on the mobile panel **(10),** the mobile panel being connected by a pivot **(46)** to an extension bar **(47)** guided in translation along a direction approximately perpendicular to the opening.

7. - Door according to claim 1, **characterised in that** the sliding and pivoting guide means **(25)** consist of at least one support and guide rail **(30)** for at least one roller device **(31)** fitted on a first mobile panel **(10)** hinged to a second mobile panel **(11)** installed hinged on the chassis, the mobile panels (**10, 11**) being intended to fold in contact with each other in the open position of the opening.

8. - Door according to claim 6 or 7, **characterised in that** the sliding and pivoting guide means (**25**) comprise a support and guide rail called the upper rail (**30**) arranged in the top part of the chassis (**6**) and a guide rail called the lower rail (**39**) arranged in the lower part of the chassis, one supporting the roller device(s), fitted on the mobile panel, and the other supporting a guide device (**35**).

9. - Automated machine **characterised in that** it comprises a door (**1**) in accordance with one of claims 1 to 8.

## Patentansprüche

1. Tür für eine automatisierte Maschine, wobei die Tür wenigstens eine bewegliche Wand (10, 11) und einen Rahmen (6) umfaßt, der eine Öffnung (7) begrenzt und der mit Mitteln zur Bewegungsführung für die bewegliche Wand (10, 11) zwischen einer Schließstellung, in der die Vorderseite (14) der beweglichen Wand (10) die Öffnung (7) wenigstens teilweise verschließt, und einer Öffnungsstellung, in der sich die bewegliche Wand (10) seitlich der Öffnung (7) befindet, versehen ist, **dadurch gekennzeichnet, daß** die bewegliche Wand (10) folgendes umfaßt:
- eine Mensch-Maschine-Schnittstelle (13), die Mittel zur Kontrolle und/oder zur Steuerung der Maschine umfaßt und die an einer Aufnahmestruktur (12) angebracht ist, wobei die Vorderseite der Mensch-Maschine-Schnittstelle (13) zugänglich ist, wenn sich die bewegliche Wand in der Schließstellung befindet,
- sowie Mittel zum Bewegen der Aufnahmestruktur (12), die sicherstellen, daß sich die Vorderseite (14) der Mensch-Maschine-Schnittstelle (13) in der Öffnungsstellung der beweglichen Wand der Öffnung (7) zugewandt befindet, um einem vor der Öffnung befindlichen Bedienungsmann zu ermöglichen, gleichzeitig auf die Öffnung und auf die Mensch-Maschine-Schnittstelle (13) zuzugreifen.

2. Tür nach Anspruch 1, **dadurch gekennzeichnet, daß** die Mittel zum Bewegen der Aufnahmestruktur (12) von den Mitteln zur Bewegungsführung (25) gebildet sind, die das Verschieben und Verschwenken der beweglichen Wand (10, 11) sicherstellen, wodurch gewährleistet ist, daß sich die Vorderseite (14) der beweglichen Wand in der Öffnungsstellung der beweglichen Wand der Öffnung (7) zugewandt befindet.

3. Tür nach Anspruch 1, **dadurch gekennzeichnet, daß** die Mittel zum Bewegen der Aufnahmestruktur (12) von Mitteln zum Verschwenken der Aufnahmestruktur (12) der Mensch-Maschine-Schnittstelle gebildet sind, so daß die Vorderseite der Mensch-Maschine-Schnittstelle (13) in der Schließstellung und in der Öffnungsstellung der beweglichen Wand zugänglich ist.

4. Tür nach Anspruch 1, **dadurch gekennzeichnet, daß** durch die Bewegungsführungsmittel sichergestellt ist, daß sich die Vorderseite der Mensch-Maschine-Schnittstelle in der Öffnungsstellung in einer Ebene erstreckt, die mit der durch die Öffnung (7) begrenzten Ebene einen Winkel zwischen 40° und 135° und vorzugsweise zwischen 60° und 110° bildet.

5. Tür nach Anspruch 1 oder 4, **dadurch gekennzeichnet, daß** durch die Bewegungsführungsmittel sichergestellt ist, daß sich die Vorderseite der Mensch-Maschine-Schnittstelle in der Öffnungsstellung in einer Ebene erstreckt, die zu der durch die Öffnung (7) begrenzte Ebene im wesentlichen senkrecht verläuft.

6. Tür nach Anspruch 1, **dadurch gekennzeichnet, daß** die Führungsmittel (25) das Verschieben und Verschwenken für eine bewegliche Wand (10) sicherstellen und von wenigstens einer Trag- und Führungsschiene (30) für wenigstens ein Rollorgan (31), mit dem die bewegliche Wand (10) ausgestattet ist, gebildet sind, wobei die bewegliche Wand über ein Drehgelenk (46) mit einer Erweiterungsstange (47) verbunden ist, die entlang einer zur Öffnung im wesentlichen senkrechten Richtung verschiebbar geführt ist.

7. Tür nach Anspruch 1, **dadurch gekennzeichnet, daß** die Verschiebeführungs- und Schwenkführungsmittel (25) von wenigstens einer Trag- und Führungsschiene (30) für wenigstens ein Rollorgan (31) gebildet sind, mit dem eine erste bewegliche Wand (10) ausgestattet ist, die an einer an dem Rahmen gelenkig angebrachten zweiten beweglichen Wand (11) angelenkt ist, wobei die beweglichen Wände (10, 11) dazu bestimmt sind, in der Öffnungsstellung der Öffnung aneinander geklappt zu werden.

8. Tür nach Anspruch 6 oder 7, **dadurch gekennzeichnet, daß** die Verschiebeführungs- und Schwenkführungsmittel (25) von einer sogenannten oberen Trag- und Führungsschiene (30), die am oberen Teil des Rahmens (6) angeordnet ist, und von einer sogenannten unteren Führungsschiene (39), die am unteren Teil des Rahmens angeordnet ist, gebildet sind, wobei die eine das oder die von der beweglichen Wand getragene(n) Rollorgan(e) aufnimmt, während die andere ein Führungsorgan (35) aufnimmt.

9. Automatisierte Maschine, **dadurch gekennzeichnet, daß** sie eine Tür (1) nach einem der Ansprüche 1 bis 8 aufweist.
